# EUROPÄISCHE PATENTSCHRIFT

(11) **EP 1 087 880 B1**
(45) Veröffentlichungstag und Bekanntmachung des Hinweises auf die Patenterteilung: **24.04.2002**
(21) Anmeldenummer: 99929221.2
(22) Anmeldetag: 15.06.1999
(51) Int. Cl.: B60T 13/74, B60T 7/08, B60T 17/18

(54) **ELEKTRISCH BETÄTIGBARES BREMSSYSTEM FÜR KRAFTFAHRZEUGE UND VERFAHREN ZU SEINER ANSTEUERUNG**
ELECTRICALLY CONTROLLED BRAKING SYSTEM AND ASSOCIATED CONTROL METHOD
SYSTEME DE FREINAGE A COMMANDE ELECTRIQUE POUR AUTOMOBILE ET SON PROCEDE DE COMMANDE

(30) Priorität: 16.06.1998 DE 19826687
(43) Veröffentlichungstag der Anmeldung: 04.04.2001
(73) Patentinhaber: Continental Teves AG & Co. oHG, 60488 Frankfurt am Main (DE)
(72) Erfinder: BÖHM, Jürgen, D-65558 Oberneisen (DE); STÖLZL, Stefan, D-69469 Weinheim (DE); NELL, Joachim, D-63452 Hanau (DE); AUGUSTYNIAK, Tomasz, D-64289 Darmstadt (DE); OEHLER, Rainer, D-64295 Darmstadt (DE)
(86) Internationale Anmeldenummer: EP9904133
(87) Internationale Veröffentlichungsnummer: WO9965746

(56) Entgegenhaltungen:
- DE-A- 3 444 301
- DE-A- 4 004 149
- DE-A- 4 029 333
- DE-A- 19 548 392
- US-A- 3 838 888

## Beschreibung

Die Erfindung betrifft ein elektrisch betätigbares Bremssystem für Kraftfahrzeuge und ein Verfahren zu seiner Ansteuerung.

Kraftfahrzeuge sind üblicherweise mit einer durch ein Bremspedal betätigbaren Betriebsbremsanlage und einer durch einen Handhebel oder ein Fußpedal betätigbaren Feststellbremsanlage ausgestattet. Während die Feststellbremsanlage in der Regel zur Sicherung eines haltenden oder abgestellten Fahrzeugs gegen Wegrollen dient, hat die Betriebsbremsanlage die Aufgabe, die Geschwindigkeit eines Fahrzeugs im Normalbetrieb zu verringern oder das Fahrzeug zum Stillstand zu bringen. Zur Verbesserung der Betriebssicherheit sind moderne Betriebsbremsanlagen vielfach mit zusätzlichen Systemen, wie z.B. ABS, ASR, Fahrdynamikregelungen, Bremsassistent und dgl., ausgestattet. In jüngerer Zeit sind elektrisch betätigbare Bremsanlagen für Kraftfahrzeuge bekannt geworden, bei denen die Betätigung eines Bremspedals durch eine Sensoreinrichtung erfaßt und in entsprechende Eingangssignale für eine Steuereinheit zur Ansteuerung der Betriebsbremsanlage umgewandelt wird. Ein Nachteil eines derartigen Steuerungskonzepts besteht allerdings darin, daß beim Ausfall der die Bremspedalbetätigung erfassenden Sensoreinrichtung auch die Betriebsbremsanlage ausfällt und eine Bremsung nur über die in der Regel auf die Hinterachse wirkende Feststellbremsanlage erreicht werden kann. Besonders bei einer allein durch die Feststellbremsanlage bewirkten Abbremsung eines Fahrzeugs mit höherer Geschwindigkeit sind jedoch die entsprechenden Radbremsen der Feststellbremsanlage einer großen Belastung ausgesetzt, was zu einem erheblichen Verschleiß der Radbremsen führen kann. Da die Zusatzsysteme, wie ABS, Bremsassistent usw., darüber hinaus nicht auf die üblichen Feststellbremsanlagen wirken, können die Hinterräder sogar blockieren, wodurch die Fahrstabilität beeinträchtigt und das Fahrzeug ins Schleudern geraten kann.

Ein elektrisch betätigbares Bremssystem gemäß dem Oberbegriff des Anspruchs 1 ist aus DE-A-34 44 301 bekannt.

Aufgabe der Erfindung ist es, ein elektrisch betätigbares Bremssystem für Kraftfahrzeuge und ein Verfahren zu seiner Ansteuerung zu schaffen, durch die eine erhöhte Zuverlässigkeit und eine Verbesserung der Betriebssicherheit ermöglicht wird.

Diese Aufgabe wird gemäß den Merkmalen der unabhängigen Patentansprüche gelöst. Vorteilhafte Ausgestaltungen und zweckmäßige Fortbildungen der Erfindung sind in den abhängigen Patentansprüchen angegeben.

In einer besonders einfachen Ausführung der Erfindung kann die zusätzliche Bremsbedieneinrichtung z.B. mit Hilfe eines manuell betätigbaren Schalters realisiert werden, der im Armaturenbrett, am Lenkrad oder einer sonstigen geeigneten Stelle angeordnet ist und durch den Fahrer im Bedarfsfall betätigt wird. Durch Betätigung des in der Regel für den Notfall gedachten Schalters kann ein entsprechendes Bremssignal einer Steuereinheit der Betriebsbremsanlage zugeführt werden, die daraufhin einen fest eingestellten Bremssollwert, z.B. in Form einer Verzögerung, eines Bremsmomentes, einer Spannkraft usw., vorgibt. In diesem Fall könnte auch die Warnblinkanlage aktiviert werden, da dieser Schalter hauptsächlich für Notfälle gedacht ist. Durch erneute Betätigung des Schalters kann der Bremsvorgang abgebrochen werden

Die Steuereinheit der Betriebsbremsanlage kann aber auch so konzipiert sein, daß bei einer Betätigung des Schalters anstelle eines festen Bremssollwertes oder einer festen Bremsverzögerung ein mit der Dauer der Betätigung kontinuierlich zunehmender Bremssollwert bzw. eine Bremsverzögerung eingestellt wird, bis ein definierter Maximalwert erreicht ist. Eine derartige Zunahme kann beispielsweise linear oder progressiv verlaufen.

Es ist allerdings auch möglich, daß bei einer Betätigung des Schalters die Verzögerung bzw. Geschwindigkeitsverringerung in Abhängigkeit von der Fahrzeuggeschwindigkeit eingestellt wird. Je höher die Fahrzeuggeschwindigkeit, desto stärker erfolgt der Bremseingriff der Betriebsbremsanlage.

In einer besonders zweckmäßigen Ausführung der Erfindung kann die zweite Bremsbedieneinrichtung auch als Sensoreinheit mit mehreren, vorzugsweise redundant und diversitär aufgebauten Sensoren aufgebaut sein, durch die z.B. der Verstellweg und die Betätigungskraft eines als Hebel, Pedal, Druckknopf oder dgl. ausgebildeten zweiten Bremsbedienelements erfaßt wird. Dadurch kann der Steuereinheit ein durch den Fahrer veränderbares Bremssignal vorgegeben werden, das in der Steuereinheit verarbeitet und in entsprechende Bremssollwerte für die Betätigung der Radbremsen umgewandelt wird. Damit kann auch über das zweite Bremsbedienelement eine dosierte Betätigung der Betriebsbremsanlage erreicht werden.

In einer weiteren vorteilhaften Ausführungsform kann das zweite Bremsbedienelement an die Ergonomie der Hand angepaßt sein und ein aktives Element enthalten, mit der eine Rückkopplung des Bremsvorgangs im Sinne einer ansteigenden Widerstandskraft bei zunehmenden Bremswert simuliert: werden kann. Dadurch kann dem Fahrer ein Gefühl für den Bremsvorgang vermittelt werden, was zur Erhöhung des Bedienungskomforts beiträgt.

Aus Sicherheitsgesichtspunkten wird die Funktionsweise der beiden Bremsbedieneinrichtungen durch eine bevorzugt redundant aufgebaute Überwachungseinrichtung überprüft, wobei z.B. bei einem erkannten Ausfall einer als Bremspedalsimulator aufgebauten ersten Bremsbedieneinrichtung eine akustische und/oder visuelle Warneinrichtung aktiviert werden kann. Dadurch kann dem Fahrer angezeigt werden, daß die Fußbetätigung der Betriebsbremse nicht mehr funktioniert und daß die Betriebsbremse über die z.B. manuell betätigbare zweite Bremsbedieneinrichtung aktiviert werden muß.

In einer weiteren besonders zweckmäßigen Ausführungsform der Erfindung können auch durch eine Feststellbremsbedieneinrichtung vorgegebene Bremssignale zur Ansteuerung einer Betriebsbremsanlage genutzt werden. Dabei können z.B. die Sensoren und/oder Schalter zur Erfassung der Bedienung einer elektrisch betätigbaren Feststellbremse verwendet werden, wodurch sich Kostenvorteile ergeben. Allerdings sind hier entsprechende Maßnahmen für eine Zuordnung zwischen der Betätigung eines Feststellbremsbedienelements und der Aktivierung der Betriebsbremsanlage und/oder Feststellbremsanlage erforderlich. Eine zweckmäßige Zuordnung kann z.B. über die Fahrzeuggeschwindigkeit derart erfolgen, daß durch Betätigung des Feststellbremsbedienelements oberhalb einer vorgegebenen Fahrzeuggeschwindigkeit die Betriebsbremsanlage und unterhalb der vorgegebenen Fahrzeuggeschwindigkeit die Feststellbremsanlage aktiviert wird. Dadurch kann auch bei Ausfall einer z.B. als Bremspedalmodul ausgebildeten Betriebsbremsbedieneinrichtung über die Betätigung der Feststellbrembedieneinrichtung eine Bremsung mit Hilfe der Betriebsbremsanlage eingeleitet werden. Dabei kann auch ein Eingriff der zusätzlichen Funktionen der Betriebsbremsanlage, wie ABS, ESP, Fahrdynamikregelung und dgl., erfolgen. Es wird außerdem sichergestellt, daß die Feststellbremsanlage nicht bei einer höheren Fahrzeuggeschwindigkeit zum Einsatz gelangt und dabei zu stark belastet wird. Trotzdem ist gewährleistet, daß der Fahrer sein Fahrzeug im Stillstand sicher durch die Feststellbremse abstellen kann.

Weitere Besonderheiten und Vorzüge der Erfindung ergeben sich aus der folgenden Beschreibung vorteilhafter Ausführungsformen anhand der Zeichnung. Es zeigen:
- Fig. 1: eine schematische Blockdarstellung eines erfindungsgemäßen Bremssystems;
- Fig. 2: ein Flußdiagramm, das ein erstes Ausführungsbeispiel einer Abarbeitung in einer Steuereinheit zeigt und
- Fig. 3: ein Flußdiagramm, das ein zweites Ausführungsbeispiel einer Abarbeitung in einer Steuereinheit zeigt.

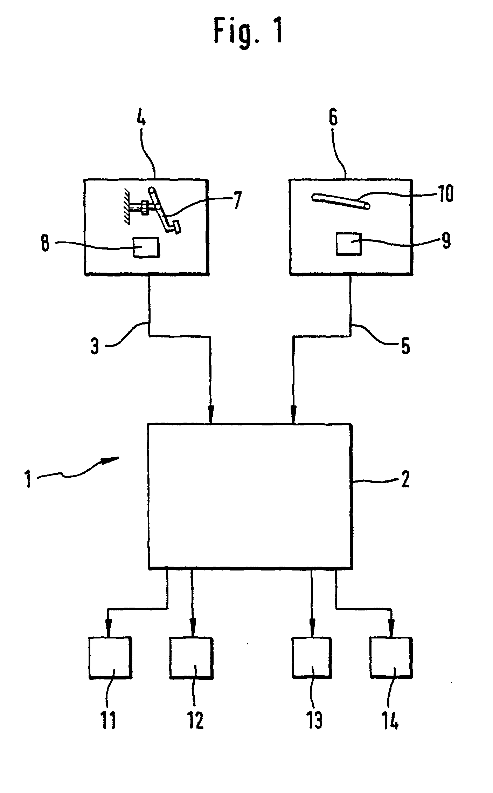

Fig. 1 zeigt schematisch eine nach dem Brake-by-Wire-Konzept aufgebaute Betriebsbremsanlage 1, bei der eine Steuereinheit 2 über eine Signalleitung 3 mit einer ersten Bremsbedieneinrichtung 4 und über eine Signalleitung 5 mit einer zweiten Bremsbedieneinrichtung 6 verbunden ist. Die erste Bremsbedieneinrichtung 4 kann z.B. ein Bremspedalmodul sein, bei dem die Betätigung eines Bremspedals 7 durch eine Sensoreinrichtung 8 erfaßt und in entsprechende Bremssignale S1 zur Ansteuerung der Betriebsbremsanlage 1 umgewandelt wird. Die zweite Bremsbedieneinrichtung 6 kann ebenfalls eine Sensoreinrichtung 9 zur Erfassung der Betätigung z.B. eines Handhebels 10 und Vorgabe entsprechender Bremssignale S2 aufweisen.

Von der Steuereinheit 2 werden die durch die beiden Bremsbedieneinrichtungen 4 und 6 vorgegeben Bremssignale in entsprechende Bremssollwerte für die Ansteuerung der Radbremsen 11 bis 14 umgewandelt. Bei der Vorgabe der Bremssollwerte können von der Steuereinheit 2 zur Realisierung sicherheitsrelevanter Zusatzfunktionen, wie z.B. ABS, Bremsassistent, Fahrstabilitätsregelung usw., auch durch nicht dargestellte Sensoren ermittelte Zusatzinformationen, wie z.B. Fahrzeuggeschwindigkeit, Querbeschleunigung, oder Gierwinkelgeschwindigkeit berücksichtigt werden.

Die Betriebsbremsanlage 1 kann sowohl von der als Bremspedalmodul ausgebildeten ersten Bremsbedieneinrichtung 4 als auch von der zweiten Bremsbedieneinrichtung 6 angesteuert werden. Damit ist der Fahrer in der Lage, auch bei Ausfall des Bremspedalmoduls über die manuell bedienbare zweite Bremsbedieneinrichtung 6 einen Bremsvorgang mit Hilfe der Betriebsbremse einleiten.

In einer weiteren Ausführungsform kann auch eine Feststellbremsbedieneinrichtung als zweite Bremsbedieneinrichtung für die Aktivierung der Betriebsbremsanlage genutzt werden.

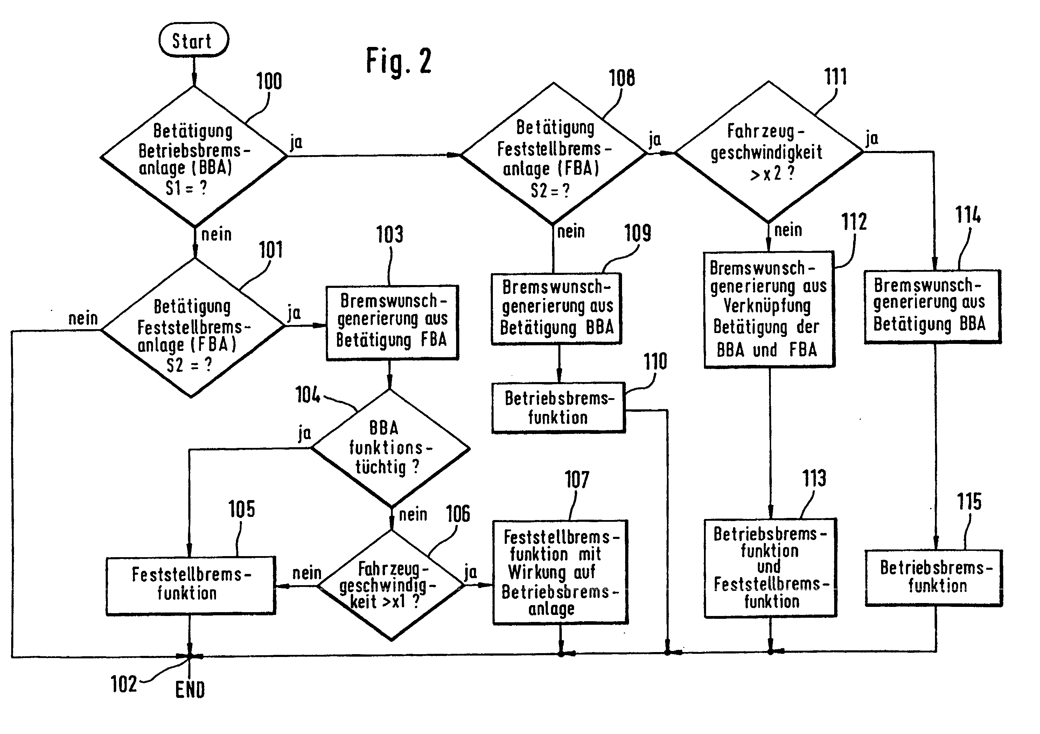

In Fig. 2 ist schematisch ein Ausführungsbeispiel für einen in einer Steuereinheit zyklisch durchgeführten Ablauf zur Ansteuerung eines Bremssystems gezeigt, bei dem die Betriebsbremse auch auf der Grundlage von Bremssignalen einer Feststellbremsbedieneinrichtung ansteuerbar ist.

Bei dem in Fig. 2 gezeigten Ablauf wird nach dem Start in einem ersten Schritt 100 abgefragt, ob durch die z.B. als Bremspedalmodul ausgeführte Betriebsbremsbedieneinrichtung ein Bremsignal S1 ausgegeben wird. Falls kein Bremssignal S1 vorliegt, wird in einem nächsten Schritt 101 überprüft, ob von der Feststellbremsbedieneinrichtung ein Bremssignal S2 ausgegeben wird. Liegt weder ein Bremssignal S1 noch ein Bremssignal S2 vor, wird davon ausgegangen, daß kein Bremseingriff durch den Fahrer gefordert wird, und der Ablauf ist am Punkt 102 beendet.

Ergibt allerdings die Abfrage im Schritt 101, daß ein durch die Feststellbremsbedieneinrichtung vorgegebenes Bremssignal S2 vorliegt, wird in einem Schritt 103 basierend auf dem Bremssignal S2 ein dem Fahrerbremswunsch entsprechender Bremssollwert generiert. Anschließend wird in einem weiteren Schritt 104 überprüft, ob die Betriebsbremsbedieneinrichtung noch funktionstüchtig ist. Wenn die Betriebsbremsbedieneinrichtung funktioniert, wird in einem Schritt 105 die Feststellbremsanlage entsprechend dem im Schritt 103 generierten Bremssollwert aktiviert. Ergibt jedoch die im Schritt 104 durchgeführte Überprüfung, daß eine Störung der Betriebsbremsbedieneinrichtung vorliegt, wird zunächst in einem Schritt 106 abgefragt, ob die Fahrzeuggeschwindigkeit über einem vorgegebenen Schwellenwert x1 liegt. Dieser Schwellenwert kann z.B. bei 5 km/h oder darunter liegen. Wenn die Fahrzeuggeschwindigkeit unter dem festgelegten Schwellenwert liegt, wird davon ausgegangen, daß der Fahrer das Fahrzeug primär abstellen will und die Feststellbremsanlage wird im Schritt 105 entsprechend dem in Schritt 103 generierten Bremssollwert aktiviert.

Wenn allerdings die Abfrage im Schritt 106 ergibt, daß die Fahrzeuggeschwindigkeit über dem festgelegten Schwellenwert x1 liegt, wird anstelle der Feststellbremsanlage in einem Schritt 107 die Betriebsbremsanlage entsprechend dem im Schritt 103 generierten Bremssollwert aktiviert. Dadurch können ggf. auch die höheren Funktionen (ABS, Fahrdynamikregelung usw.) zum Einsatz gelangen, um z.B. ein Blockieren der Räder zu verhindern. Darüber hinaus wird vermieden, daß ein Fahrer bei zu hoher Geschwindigkeit die Feststellbremsanlage aktiviert, wodurch diese stark beansprucht wird und sogar defekt werden könnte.

Bremst der Fahrer sein Fahrzeug durch Betätigung der Feststellbremsbedieneinrichtung ab, so wird oberhalb der Geschwindigkeitsschwelle x1 die Betriebsbremsanlage und ab der Fahrzeugeschwindigkeit x1 die Feststellbremsanlage aktiviert. Das bedeutet, daß der Fahrer sein Fahrzeug im Stillstand sicher abstellen kann. Um keine ruckartige Bremsung bei der Umschaltung von der Betriebsbremsfunktion auf die Feststellbremsfunktion zu erhalten, kann beispielsweise die Gesamtfahrzeugverzögerung im Umschaltpunkt, die von der Betriebsbremsanlage erzeugt wird, ähnlich groß der Gesamtfahrzeugverzögerung der Feststellbremsanlage eingeregelt oder eingesteuert werden. Anstelle der Gesamtfahrzeugverzögerung können auch Bremskräfte oder Bremsmomente als Kriterium für die Erzeugung eines ruckfreien Übergangs gewählt werden. Wird die Geschwindigkeitsschwelle x1 allerdings so klein gewählt, daß ein ruckartiger Übergang erst gar nicht vom Fahrer wesentlich spürbar auftreten wird, kann auf die Anpassung der Fahrzeugverzögerung im Umschaltpunkt verzichtet werden.

Da in der Regel die Fahrzeugeschwindigkeit im Fahrzeug bekannt und auch z.B. von verschiedenen Steuergeräten als Eingangsinformation benötigt wird, ist kein großer Aufwand für die Bereitstellung dieser Information als Umschaltkriterium zwischen der Betriebsbrems- und Feststellbremsbetätigung erforderlich. So wird die Fahrzeuggeschwindigkeit z.B. für die ABS-Funktion aus den Signalen von Raddrehzahlsensoren berechnet und steht somit zur Verfügung. Fällt die Fahrzeuggeschwindigkeitsinformation aus, so wird nur noch die Feststellbremse aktiviert, ohne daß eine Wirkung auf die Betriebsbremsanlage erfolgt.

Wenn hingegen bei der Abfrage im Schritt 100 ein durch die Betriebsbremsbedieneinrichtung vorgegebenes Bremssignal S1 ermittelt wird, folgt in einem nächsten Schritt 108 eine Abfrage, ob auch durch die Feststellbremsbedieneinrichtung ein Bremssignal S2 vorgegeben wird. Wenn dies nicht der Fall ist, wird davon ausgegangen, daß der Fahrer eine Betätigung der Betriebsbremsanlage wünscht. Daher wird in einem Schritt 109 basierend auf dem Bremsignal S1 ein dem Fahrerbremswunsch entsprechender Bremssollwert generiert und in einem nächsten Schritt 110 wird die Betriebsbremsanlage entsprechend dem im Schritt 109 generierten Hremssollwert aktiviert.

Wenn sich allerdings durch die Abfrage in den Schritten 100 und 108 ergibt, daß sowohl durch die Betriebsbremsbedieneinrichtung als auch durch die Feststellbremsbedieneinrichtung Bremssignale S1 und S2 vorgegeben werden, wird in einem Schritt 111 überpüft, ob die Fahrzeuggeschwindigkeit über einem Schwellenwert x2 liegt. Wenn dies nicht der Fall ist, erfolgt in einem Schritt 112 die Bremswunschgenerierung aus einer Verknüpfung der Betriebsbrems- und Feststellbremsbetätigung durch den Fahrer. Die Verknüpfung erfolgt so, daß der resultierende Wert größer gleich dem Minimum aus beiden Bremswünschen ist. Dies kann beispielsweise in Form einer Maximumsbildung oder Durchschnittsbildung beider Werte erfolgen. Anschließend wird in einem Schritt 113 mit diesem resultierenden Bremssollwert die Betriebsbremsanlage und die Feststellbremsanlage aktiviert.

Ergibt hingegen die Abfrage im Schritt 111, daß die Fahrzeuggeschwindigkeit größer als der Schwellenwert x2 ist, wird auf der Grundlage des durch die Betriebsbremsbedieneinrichtung vorgegebenen Bremssignals S2 in einem nächsten Schritt 114 ein dem Fahrerbremswunsch entsprechender Bremssollwert generiert. Anschließend wird in einem Schritt 115 die Betriebsbremsanlage entsprechend dem in Schritt 114 generierten Bremssollwert aktiviert.

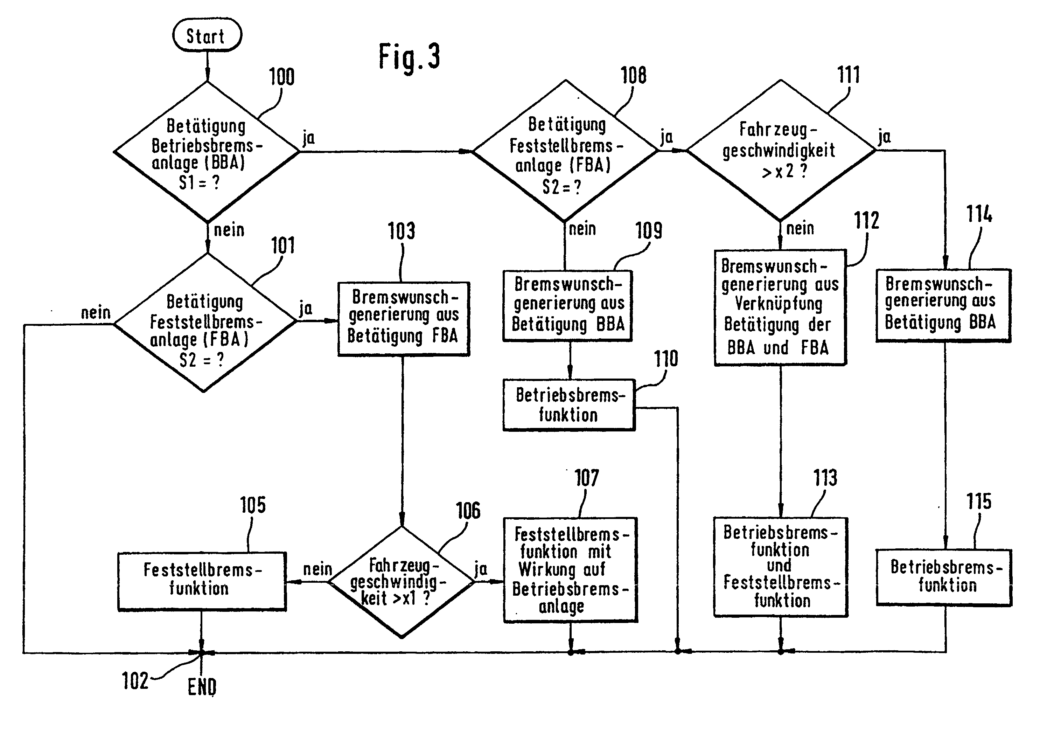

Der in Fig. 3 dargestellte Ablauf entspricht im wesentlichen dem Ablauf gemäß Fig. 2, so daß die übereinstimmenden Schritte mit denselben Bezugszeichen versehen sind. Im Unterschied zur Ausführung nach Fig. 2 wird bei der Ausführung gemäß Fig. 3 auf den Schritt 104 zur Vereinfachung verzichtet. Das bedeutet, daß die Abfrage nach der Funktionsfähigkeit der Betriebsbremsbedieneinrichtung entfällt. Es erfolgt vielmehr im Anschluß an den Schritt 103 der Abfrageschritt 106, in dem die Unterscheidung zwischen der Aktivierung der Feststell- oder Betriebsbremse in Abhängigkeit vom Schwellenwert x1 der Fahrzeuggeschwindigkeit erfolgt.

Bei einer weiteren vereinfachten Ausführung von Fig. 2 und Fig. 3 kann der Fahrzeuggeschwindigkeitsschwellenwert x1 gleich dem Fahrzeuggeschwindigkeitsschwellenwert x2 gesetzt werden. Die anhand der Fig. 2 und 3 beschriebene Vorgehensweise kann auch dahingehend abgewandelt werden, daß zunächst die Feststellbremsbedieneinrichtung und dann die Betriebsbremsbedieneinrichtung abgefragt wird.

Obwohl in der Regel die Betriebsbremsbedieneinrichtung über eine Fußbetätigung erfolgt, könnte diese auch manuell erfolgen. Auch die Feststellbremsbedieneinrichtung ist manuell oder durch Fußpedal betätigbar.

## Patentansprüche

1. Elektrisch betätigbares Bremssystem für Kraftfahrzeuge mit einer ersten Bremsbedieneinrichtung (4) zur Erfassung der Betätigung eines ersten Bremsbedienelements (7) und Vorgabe entsprechender Bremssignale (S1), einer durch den Fahrer betätigbaren zweiten Bremsbedieneinrichtung (6) zur Vorgabe entsprechender Bremssignale (S2) und
einer Betriebsbremsanlage (1), die auf der Grundlage der durch die erste Bremsbedieneinrichtung (4) sowie die zweite Bremsbedieneinrichtung (6) vorgegebenen Bremssignale (S1,S2) aktivierbar ist, wobei die zweite Bremsbedieneinrichtung (6) mindestens ein Schaltelement und/oder eine Sensoreinrichtung (9) mit wenigstens einem Sensor zur Erfassung der Betätigung eines zweiten Bremsbedienelements (10) umfaßt und wobei die Betriebsbremsanlage (1) mindestens eine Steuereinheit (2) zur Umwandlung der durch die zweite Bremsbedieneinrichtung (6) vorgegebenen Bremssignale (S2) in Bremssollwerte für die Ansteuerung entsprechender Betriebsbremsen (11,12,13,14) umfaßt, **dadurch gekennzeichnet,**
**daß** durch die Steuereinheit (2) bei Betätigung der zweiten Bremsbedieneinrichtung (6) ein fester Bremssollwert oder ein bis zu einem Maximalwert ansteigender Bremssollwert oder ein von der Fahrzeuggeschwindigkeit abhängiger Bremssollwert für die Ansteuerung der Betriebsbremsen vorgegeben wird.

2. Bremssystem nach Anspruch 1, **dadurch gekennzeichnet, daß** die Betriebsbremsen (11,12,13,14) jeweils mindestens eine Steuereinheit zur Umwandlung der durch die zweite Bremsbedieneinrichtung (6) vorgegebenen Bremssignale (S2) in Bremskraft umfassen.

3. Bremssystem nach Anspruch 1 **dadurch gekennzeichnet, daß** durch die Steuereinheit (2) ein in Abhängigkeit von der Betätigung eines zweiten Bremsbedienelements (10) abhängiger Bremssollwert für die Ansteuerung der Betriebsbremsen (11,12,13,14) vorgegeben wird.

4. Bremssystem nach Anspruch 3 **dadurch gekennzeichnet, daß** dem zweiten Bremsbedienelement (10) ein aktives Element zur Simulation der Bremswirkung zugeordnet ist.

5. Bremssystem nach einem der Ansprüche 1 bis 4, **dadurch gekennzeichnet, daß** die Funktion der ersten und zweiten Bremsbedieneinrichtung (4,6) durch eine Überwachungseinrichtung überprüfbar ist.

6. Bremssystem nach einem der Ansprüche 1 bis 4, **dadurch gekennzeichnet, daß** die zweite Bremsbedieneinrichtung (6) die Bedieneinrichtung einer elektrisch betätigbaren Feststellbremse ist, durch welche die Betriebsbremsanlage (1) oberhalb einer vorbestimmten Fahrzeugeschwindigkeit aktivierbar ist.

7. Verfahren zur Ansteuerung eines elektrisch betätigbaren Bremssystems für Kraftfahrzeuge, bei dem die Betätugung einer Betriebsbremsanlage und/oder einer Feststellbremsanlage auf der Grundlage von Bremssignalen einer durch den Fahrer betätigbaren Betriebsbremsbedieneinrichtung und Bremssignalen einer Feststellbremsbedieneinrichtung erfolgt, **dadurch gekennzeichnet, daß** durch die Betätigung der Feststellbremsbedieneinrichtung oberhalb einer vorgegebenen Fahrzeuggeschwindigkeit die Betriebsbremsanlage aktiviert wird.

8. Verfahren nach Anspruch 7, **dadurch gekennzeichnet, daß** vor der Aktivierung der Betriebsbremsanlage durch die Feststellbremsbedieneinrichtung eine Funktionsüberprüfung der Betriebsbremsbedieneinrichtung durchgeführt wird.

9. Verfahren nach Anspruch 7 oder 8, **dadurch gekennzeichnet, daß** bei gleichzeitig vorliegenden Bremssignalen der Betriebsbremsbedieneinrichtung und der Feststellbremsbedieneinrichtung oberhalb einer vorgegebenen Fahrzeuggeschwindigkeit die Betriebsbremsanlage und unterhalb der vorgegebenen Fahrzeuggeschwindigkeit die Betriebsbremsanlage und die Feststellbremsanlage aktiviert wird.

## Claims

1. Electrically operable brake system for automotive vehicles with a first brake operating device (4) for sensing the actuation of a first brake operating element (7) and for specifying corresponding brake signals (S1), a second brake operating device (6) operable by the driver for specifying corresponding brake signals (S2), and a service brake system (1) which can be activated on the basis of the brake signals (S1, S2) predetermined by the first brake operating device (4) and the second brake operating device (6), wherein the second brake operating device (6) comprises at least one switching element and/or a sensor device (9) with at least one sensor for sensing the actuation of a second brake operating element (10), and wherein the service brake system (1) comprises at least one control unit (2) for converting the brake signals (S2) predetermined by the second brake operating device (6) into nominal brake values for the actuation of corresponding service brakes (11, 12, 13, 14),
**characterized in that** a fixed nominal brake value, or a nominal brake value rising up to a maximum value, or a vehicle-speed responsive nominal brake value is predetermined for the actuation of the service brakes by the control unit (2) upon activation of the second brake operating device (6).

2. Brake system as claimed in claim 1,
**characterized in that** each of the service brakes (11, 12, 13, 14) comprises at least one control unit for converting the brake signals (S2) predetermined by the second brake operating device (6) into brake force.

3. Brake system as claimed in claim 1,
**characterized in that** a nominal brake value which is responsive to the activation of a second brake operating element (10) is predetermined by the control unit (2) for the actuation of the service brakes (11, 12, 13, 14).

4. Brake system as claimed in claim 3,
**characterized in that** associated with the second brake operating element (10) is an active element for the simulation of the brake effect.

5. Brake system as claimed in any one of claims 1 to 4,
**characterized in that** the function of the first and second brake operating device (4, 6) can be tested by a monitoring device.

6. Brake system as claimed in any one of claims 1 to 4,
**characterized in that** the second brake operating device (6) is the operating device of an electrically operable parking brake which permits activating the service brake system (1) above a predetermined vehicle speed.

7. Method for the actuation of an electrically operable brake system for automotive vehicles, wherein the activation of a service brake system and/or a parking brake system is effected on the basis of brake signals of a service brake operating device operable by the driver and brake signals of a parking brake operating device,
**characterized in that** the service brake system is activated by the activation of the parking brake device above a predetermined vehicle speed.

8. Method as claimed in claim 7,
**characterized in that** a function test of the service brake operating device is performed prior to the activation of the service brake system by the parking brake operating device.

9. Method as claimed in claim 7 or 8,
**characterized in that**, in the event of simultaneous provision of brake signals of the service brake operating device and the parking brake operating device, the service brake system is activated above a predetermined vehicle speed and the service brake system and the parking brake system are activated below the predetermined vehicle speed.

## Revendications

1. Système de freinage à actionnement électrique pour véhicules automobiles comportant un premier dispositif de commande de freinage (4) pour détecter l'actionnement d'un premier élément de commande de freinage (7) et prédéfinir des signaux de freinage (S1) correspondants, un deuxième dispositif de commande de freinage (6), à actionner par le conducteur, pour prédéfinir des signaux de freinage (S2) correspondants, ainsi qu'une installation de freinage de service (1) qui peut être activée sur la base des signaux de freinage (S1, S2) prédéfinis par le premier dispositif de commande de freinage (4) ainsi que par le deuxième dispositif de commande de freinage (6), le deuxième dispositif de commande de freinage (6) comprenant au moins un élément de commutation et/ou un dispositif à capteurs (9) avec au moins un capteur pour détecter l'actionnement d'un deuxième élément de commande de freinage (10), et l'installation de freinage de service (1) comprenant au moins une unité de commande (2) pour convertir les signaux de freinage (S2), prédéfinis par le deuxième dispositif de commande de freinage (6), en valeurs de consigne de freinage pour la commande de freins de service (11, 12, 13, 14) correspondants,
**caractérisé**
**en ce que** lorsque le deuxième dispositif de commande de freinage (6) est actionné, l'unité de commande (2) prédéfinit une valeur de consigne de freinage fixe, ou une valeur de consigne de freinage augmentant jusqu'à une valeur maximale, ou une valeur de consigne de freinage dépendant de la vitesse du véhicule, pour la commande des freins de service.

2. Système de freinage selon la revendication 1, **caractérisé en ce que** les freins de service (11, 12, 13, 14) comportent chacun au moins une unité de commande pour convertir en force de freinage les signaux de freinage (S2) prédéfinis par le deuxième dispositif de commande de freinage (6).

3. Système de freinage selon la revendication 1, **caractérisé en ce que** l'unité de commande (2) prédéfinit une valeur de consigne de freinage dépendant de l'actionnement d'un deuxième élément de commande de freinage (10), pour la commande des freins de service (11, 12, 13, 14).

4. Système de freinage selon la revendication 3, **caractérisé en ce qu'**au deuxième élément de commande de freinage (10) est associé un élément actif pour la simulation de l'action de freinage.

5. Système de freinage selon l'une des revendications 1 à 4, **caractérisé en ce que** le fonctionnement du premier et du deuxième dispositifs de commande de freinage (4, 6) peut être contrôlé par un dispositif de surveillance.

6. Système de freinage selon l'une des revendications 1 à 4, **caractérisé en ce que** le deuxième dispositif de commande de freinage (6) est le dispositif de commande d'un frein de stationnement à actionnement électrique, au moyen duquel l'installation de freinage de service (1) peut être activée au-dessus d'une vitesse prédéterminée du véhicule.

7. Procédé de commande d'un système de freinage à actionnement électrique pour véhicules automobiles, dans lequel l'actionnement d'une installation de freinage de service et/ou d'une installation de freinage de stationnement s'effectue sur la base de signaux de freinage d'un dispositif de commande de frein de service, à actionner par le conducteur, et de signaux de freinage d'un dispositif de commande de frein de stationnement, **caractérisé en ce que**, pour actionner le dispositif de commande de frein de stationnement, l'installation de freinage de service est activée au-dessus d'une vitesse prédéterminée du véhicule.

8. Procédé selon la revendication 7, **caractérisé en ce qu'**un contrôle du fonctionnement du dispositif de commande de frein de service est exécuté avant l'activation de l'installation de freinage de service, par le dispositif de commande de frein de stationnement.

9. Procédé selon la revendication 7 ou 8, **caractérisé en ce qu'**en présence simultanée de signaux de freinage du dispositif de commande de frein de service et du dispositif de commande de frein de stationnement, l'installation de freinage de service est activée au-dessus d'une vitesse prédéterminée du véhicule, et l'installation de freinage de service et l'installation de freinage de stationnement sont activées au-dessous de la vitesse prédéterminée du véhicule.
